# EUROPÄISCHE PATENTSCHRIFT

(11) **EP 1 984 194 B1**
(45) Veröffentlichungstag und Bekanntmachung des Hinweises auf die Patenterteilung: **04.04.2012**
(21) Anmeldenummer: 07701868.7
(22) Anmeldetag: 09.02.2007
(51) Int. Cl.: B60D 1/58, B60D 1/06

(54) **ANHÄNGERKUPPLUNG FÜR STEUERBARE ANHÄNGER**
TRAILER COUPLING FOR CONTROLLABLE TRAILERS
ACCOUPLEMENT DE REMORQUE POUR REMORQUE COMMANDABLE

(30) Priorität: 14.02.2006 CH 238062006
(43) Veröffentlichungstag der Anmeldung: 29.10.2008
(73) Patentinhaber: Rogenmoser, Walter, 6314 Unterägeri (CH)
(72) Erfinder: Rogenmoser, Walter, 6314 Unterägeri (CH)
(74) Vertreter: Liebetanz, Michael
(86) Internationale Anmeldenummer: PCT/CH2007/000068
(87) Internationale Veröffentlichungsnummer: WO 2007/093069

(56) Entgegenhaltungen:
- WO-A-2006/041728
- DE-A1- 10 334 000
- DE-A1- 19 615 398
- DE-A1- 19 910 542
- US-A- 3 328 741
- US-A- 3 947 839

## Beschreibung

### Technisches Gebiet der Erfindung

Die vorliegende Erfindung betrifft eine Anhängerkupplung für steuerbare Anhänger wie offenbart in DE 103 34 000 A1 und weist die Merkmale des Oberbegriffs des Anspruchs 1

### Stand der Technik

Aus dem Stand der Technik sind verschiedene Kupplungen zur Verbindung eines Anhängers mit einem Zugfahrzeug bekannt. Dabei werden sowohl kugelförmige als auch zylinderförmige Elemente verwendet.

Kugelförmige Anhängerkupplungen sind aus dem Stand der Technik bekannt. Dabei weist ein an einem Fahrzeug befestigter erster Kupplungskörper die Form einer Kugel auf. Ein an einem Anhänger befestigter zweiter Kupplungskörper weist ein passendes Gegenstück zum äusseren Kupplungskörper auf. Der zweite Kupplungskörper hat vorteilhafterweise die Form einer hohlen Halbkugel.

Bei Anhängern, welche eine lenkbare Achse aufweisen, wird diese Achse von einem separaten Steuersystem gesteuert. Dabei sollen die Räder so geschwenkt werden, dass der Anhänger in der gleichen Spur wie das Zugfahrzeug fährt. Aus dem Stand der Technik ist bekannt, die lenkbare Achse mittels einer Stange, welche mit der lenkbaren Achse und mit den Zugfahrzeug verbunden ist, zu verschwenken. Diese Vorrichtung wird in der Regel in Kombination mit einer Kugel-Kupplung oder einer Bolzen-Kupplung verwendet. Nachteilig bei dieser Anordnung ist, dass das Manöver des Ankuppelns eines Anhängers an ein Zugfahrzeug relativ kompliziert ist. Denn das Zugfahrzeug muss dabei beim Ankuppeln in die identische Position gebracht werden, wie das Zugfahrzeug beim Abkuppeln des Anhängers positioniert wurde. Dies ist für den Benutzer ein grosser Aufwand und sehr zeitraubend. Durch die besagte Stange besteht ein im Bereich der Kupplung überstehendes Teil, dass das Zugfahrzeug beschädigen kann oder Heranfahren des Zugfahrzeuges selbst beschädigt wird. Die Unfallgefahr bei einer Ankoppelung mit einer Hilfsperson ist dadurch ungleich grösser als bei Anhängern ohne lenkbare Achse.

### Darstellung der Erfindung

Ausgehend von diesem Stand der Technik liegt der Erfindung die Aufgabe zugrunde, eine Vorrichtung bereitzustellen, mit welcher eine lenkbare Achse einfacher ausgerichtet werden kann.

Diese Aufgabe wir erfindungsgemäss von einer Kupplungsvorrichtung nach Anspruch 1 gelöst. Dabei umfasst eine Kupplungsvorrichtung zur Messung eines Winkels zwischen einem Anhänger und einem Zugfahrzeug einen ersten Kupplungskörper, der eine mindestens teilweise kugelförmige Kuppeloberfläche aufweist, und einen zweiten Kupplungskörper, der eine zur Kuppeloberfläche des ersten Kupplungskörpers mindestens teilweise komplementäre Form aufweist. An der Kuppeloberfläche des ersten oder des zweiten Kupplungskörpers ist eine Messfläche vorgesehen, die sich über ein Teilsegment der Kuppelfläche des jeweiligen Kupplungskörpers erstreckt.

Die Vorrichtung umfasst weiterhin ein Messmittel zur Messung der Messfläche. Dieses Messmittel ist an dem Kupplungskörper angeordnet, an dem die Messfläche nicht angeordnet ist.

Weitere vorteilhafte Ausführungsformen sind in den Unteransprüchen gekennzeichnet.

### Kurze Beschreibung der Zeichnung

Die Erfindung wird im folgenden anhand der Zeichnung näher beschrieben. Es zeigt:
- Fig. 1: eine perspektivische Darstellung eines inneren Kupplungskörpers gemäss der vorliegenden Erfindung;
- Fig. 2: eine Seitenansicht des inneren Kupplungskörpers der Figur 1;
- Fig. 3: eine andere Seitenansicht des inneren Kupplungskörpers der Figur 1;
- Fig. 4: eine schematische Draufsicht der geometrischen Verhältnisse des inneren Kupplungskörpers der Figur 1;
- Fig. 5: eine teilweise geschnittene Draufsicht des inneren Kupplungskörpers der Figur 1 in Kombination mit einem äusseren Kupplungskörper für eine Geradeaus-Fahrt;
- Fig. 6: eine teilweise geschnittene Draufsicht der Figur 5 für die Fahrrichtung links;
- Fig. 7: eine teilweise geschnittene Draufsicht der Figur 6 für die Fahrtrichtung rechts;
- Fig. 8: eine teilweise geschnittene Seitenansicht des äusseren und des inneren Kupplungskörpers bei der Überfahrt einer Kuppe bzw. bei der Durchfahrt einer Senke; und
- Fig. 9: eine teilweise geschnittene Ansicht des äusseren und des inneren Kupplungskörpers, wobei diese einander geneigt gegenüber stehen.

### Beschreibung eines Ausführungsbeispiels

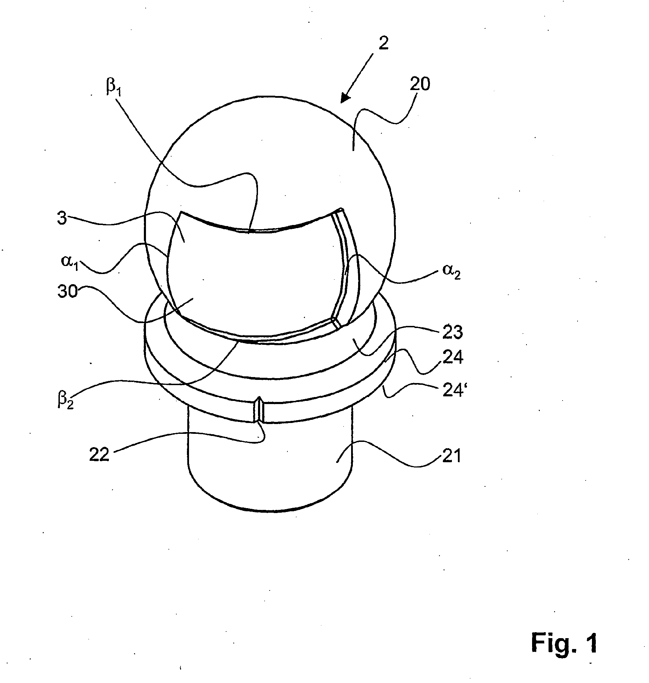

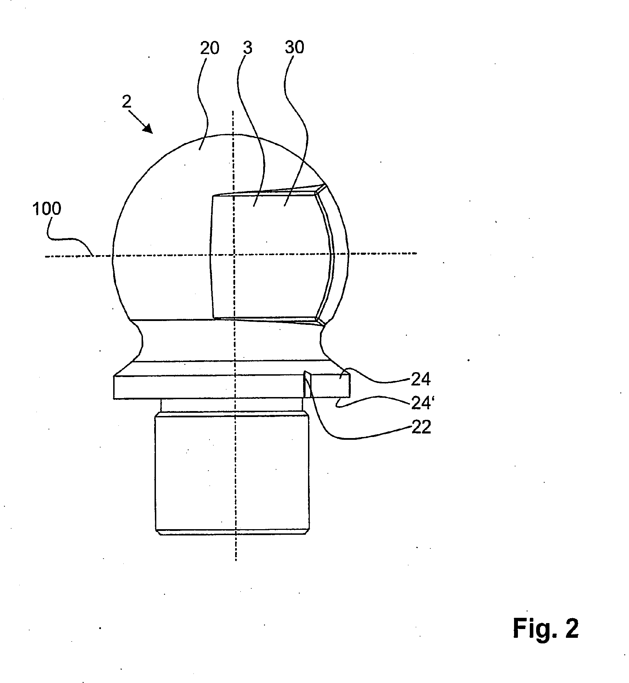

Die Figuren 1 bis 8 zeigen eine Kupplungsvorrichtung zur Ankupplung eines Anhängers an ein Zugfahrzeug gemäss einem Ausführungsbeispiel der vorliegenden Erfindung. Diese Kupplungsvorrichtung umfasst im wesentlichen einen äusseren oder ersten Kupplungskörper 1 und einen inneren oder zweiten Kupplungskörper 2. Vorzugsweise ist der erste Kupplungskörper 1 am Anhänger und der zweite Kupplungskörper 2 am Zugfahrzeug angeordnet. Der erste Kupplungskörper ist in einer Zugstange 5 eines Anhängers integriert und hat die Form einer Kugelpfanne. Dabei hat die Kugelpfanne die Form eines Hohlkugelsegmentes, wobei dieses Hohlkugelsegment in der Seitenansicht einen Segmentwinkel von mindestens 180° hat. Der zweite Kupplungskörper 2 ist im wesentlichen als Kugel ausgestaltet und ist am Zugfahrzeug befestigt bzw. befestigbar. Dem Fachmann ist klar, dass alternativ der Kupplungskörper an der Zugstange 5 als Kugel und der Kupplungskörper am Zugfahrzeug dann als Kugelpfanne ausgestaltet werden kann.

Figur 1 zeigt ein Ausführungsbeispiel des inneren Kupplungskörpers 2 in einer perspektivischen Ansicht. In einem oberen Bereich des inneren Kupplungskörpers 2 ist im wesentlichen eine Kupplungskugel 20 und eine in diese Kupplungskugel integrierte Messfläche 3 angeordnet.

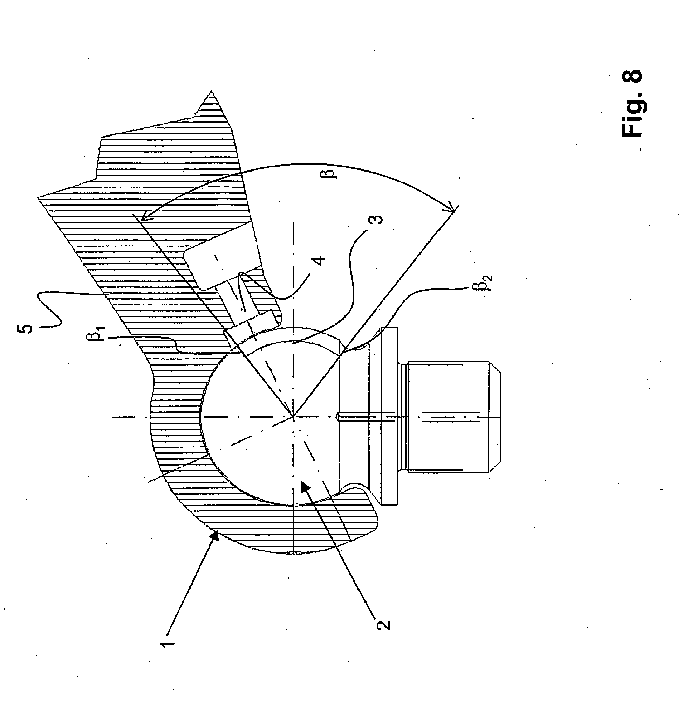

Ein Freistich 23 bildet den Übergang vom oberen Bereich des Kupplungskörpers 2 in einen unteren Bereich. Der Freistich 23 schafft Raum für die Bewegung des äusseren Kupplungskörpers 1 bei der Überfahrt einer Kuppe bzw. der Durchfahrt einer Senke, beziehungsweise bei der Überfahrt von unterschiedlich quer liegenden Fahrbahnen. Insbesondere gestattet er eine grössere Mantelabdeckung des äusseren Kupplungskörpers 1. Dies ist insbesondere in Figur 8 ersichtlich. Der untere Bereich umfasst im wesentlichen einen Flansch 24 und ein Befestigungsgewinde 21. Mittels dem Befestigungsgewinde 21 kann der zweite Kupplungskörper am Zugfahrzeug befestigt werden. Am Flansch 24, welcher zwischen dem Befestigungsgewinde 21 und dem Freistich 23 angeordnet ist, ist zudem eine Orientierungsmarkierung 22 angeordnet. Diese Markierung 22 ist mechanisch in den Flansch eingearbeitet und hat die Form einer Kerbe. Anstelle eines Gewindes kann der innere Kupplungskörpers 1 auch einen zylindrischen Zapfen aufweisen, welcher dann über einen Formschluss mit dem Zugfahrzeug verbunden wird. Eine Kombination von Gewinde und Zapfen ist ebenfalls möglich.

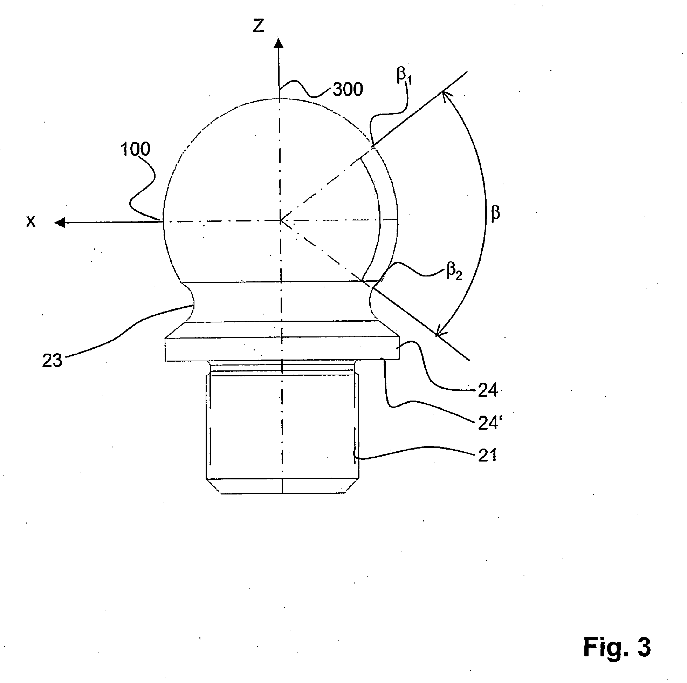

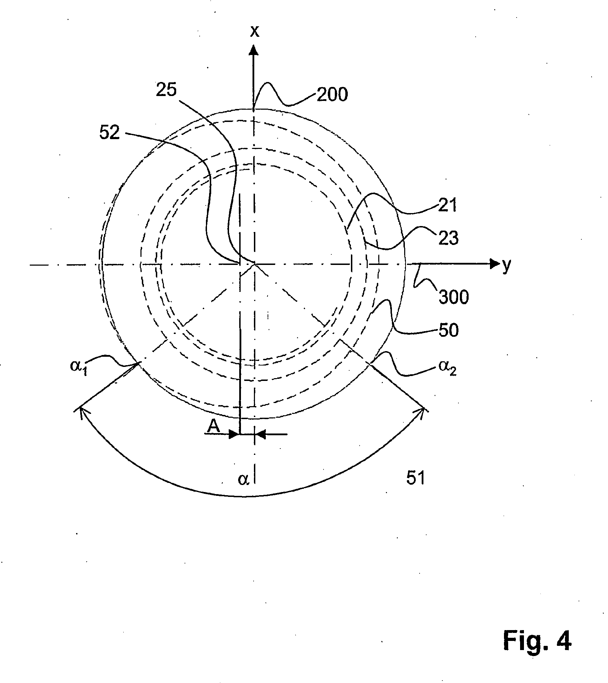

Figur 3 zeigt den inneren Kupplungskörper 2 gemäss der vorliegenden Erfindung in einer Seitenansicht. Figur 4 zeigt die geometrischen Verhältnisse des inneren Kupplungskörpers in einer Draufsicht. Eine horizontale Ebene 100 geht durch das Zentrum 25 der Kupplungskugel 20 und liegt im wesentlichen parallel zu einer unteren Ebene 24' des Flansches 24. Eine vertikale Ebene 200 steht senkrecht zur horizontalen Ebene 100, zusätzlich geht diese vertikale Ebene ebenfalls durch das Zentrum 25 der Kupplungskugel 20 und durch die Orientierungsmarkierung 22. Eine dritte Ebene 300 steht senkrecht zu der horizontalen Ebene 100 und zu der vertikalen Ebene 200. Diese dritte Ebene 300 geht ebenfalls durch das Zentrum 25 der kupplungskugel 20. Eine Achse X geht aus der Schnittlinie der horizontalen Ebene 100 und der vertikalen Ebene 200 hervor. Eine Mittelachse Y geht aus der horizontalen Ebene 100 und aus der dritten Ebene 300 hervor. Eine Mittelachse Z geht aus der vertikalen Ebene 200 und aus der dritten Ebene 300 hervor.

Stehen nun das Zugfahrzeug und der Anhänger in einer gemeinsamen Achse, so ist diese gemeinsame Achse die vordefinierte X-Achse. Das heisst, dass wenn sich das Zugfahrzeug und der Anhänger geradeaus bewegen, diese Bewegung in Richtung der X-Achse erfolgt.

Wie in den Figuren erkennbar, ist die Messfläche 3 in der Oberfläche der Kupplungskugel 2 als Tasche versenkt eingearbeitet. Die Messfläche 3 umfasst im wesentlichen eine kugelförmige Oberfläche 30.

Figur 4 ist eine Draufsicht auf den inneren Kupplungskörper 2 und zeigt die geometrischen Verhältnisse des bevorzugten Ausführungsbeispiels besonders gut. Zur Erklärung der geometrischen Verhältnisse zwischen der Kupplungskugel 20 und der Messfläche 3, wird zeichnerisch eine virtuelle Kugel 50 eingeführt. Die virtuelle Kugel 50 wird dabei so in die Kupplungskugel 20 gelegt, dass diese exzentrisch zur Kupplungskugel 20 liegt, so dass die kugelförmige Oberfläche 30 der Messfläche 3 dabei ein Oberflächensegment 51 dieser virtuellen Kugel 50 bildet. Das Zentrum 52 der virtuellen Kugel 50, d.h. also auch das Zentrum 52 der kugelförmigen Oberfläche 30, ist vorzugsweise auf der Achse Y in einem Abstand A zur Achse X bzw. zum Zentrum 25 der Kupplungskugel 20 angeordnet. Das Oberflächensegment 51 bzw. die Messfläche 3 ist durch einen Öffnungswinkel α in der horizontalen Ebene 100 begrenzt. Der Öffnungswinkel α erstreckt sich von einer ersten Öffnungslinie α₁ zu einer zweiten Öffnungslinie α₂, wobei α₁ die Schnittlinie der Kupplungskugel 20 und der virtuellen Kugel 50 ist. In diesem Fall ist α₁ ein Teil der Oberfläche der Kupplungskugel und α₂ ist gegenüber der Oberfläche der Kupplungskugel versetzt. Durch einen Öffnungswinkel β wird das Segment bzw. die Messfläche 3 in der vertikalen Ebene 200 begrenzet.

Auch hier wird der Öffnungswinkel β durch eine erste Öffnungslinie β₁ und eine zweite Öffnungslinie β₂ begrenzt. Aufgrund des Versatzes des Zentrums der virtuellen Kugel 50 in eine Richtung bzw. in einer Ebene, ist die Distanz von der Oberfläche der virtuellen Kugel 50 zur Oberfläche der Kupplungskugel 20 über den gesamten Öffnungswinkel α variabel und über den gesamten Öffnungswinkel β konstant. Im bevorzugten Ausführungsbeispiel hat die virtuelle Kugel 50 bzw. die kugelförmige Oberfläche 30 einen Radius, der vorzugsweise kleiner ist, als der Radius der Kupplungskugel 20.

Alternativ kann die erste Öffnungslinie α₁ auch so angeordnet sein; dass diese kein Teil von der Oberfläche der Kupplungskugel ist. Das heisst, die Messfläche 3 ist dann auch schon bei α₁ gegenüber der Oberfläche der Kupplungskugel versetzt.

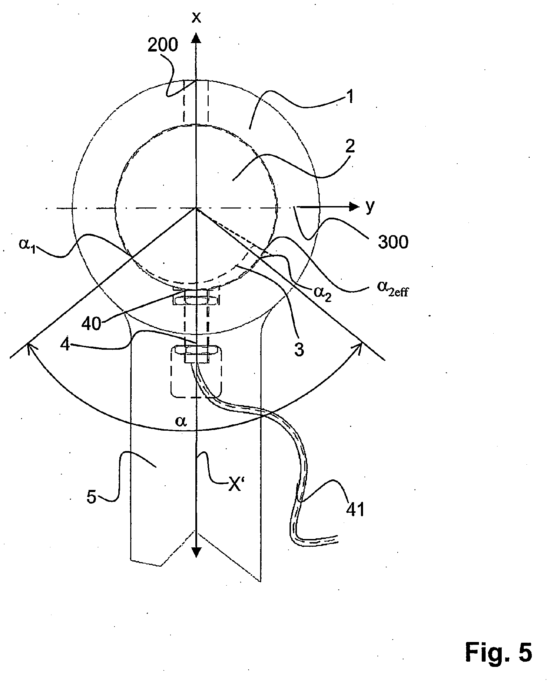

Figur 5 zeigt ein bevorzugtes Ausführungsbeispiel, welches nach den theoretischen Ausführungen zur Figur 4 ausgestaltet ist. Hier wird eine Kupplungskugel 20 mit einem Durchmesser von 80 mm verwendet. Der Abstand A wird dann vorzugsweise zwischen 3 mm und 8 mm gewählt. Vorzugsweise ist die Distanz zwischen der Oberfläche der Kupplungskugel und der Messfläche bei α₁ 0 mm und bei α₂ 6 mm. Der Öffnungswinkel α ist in diesem Ausführungsbeispiel 100° und der Öffnungswinkel β ist in diesem Ausführungsbeispiel 73°. Je nach Anwendungsgebiet können diese Winkel auch kleiner oder grösser ausgestaltet sein.

In Figur 5 ist der erste Kupplungskörper 1 und der zweite Kupplungskörper 2 in einem gekuppelten Zustand in einer schematischen teilweise geschnittenen Draufsicht erkennbar. Zudem ist ein Sensor 4 ersichtlich, welcher in diesem Ausführungsbeispiel in der Zugstange 5 bzw. im äusseren Kupplungskörper 1 angeordnet ist. Der Sensor 4 ist dabei vorteilhafterweise in der Zugstangenachse X' angeordnet.

Der Sensor 4 dient zur Messung der Distanz von der Sensoroberfläche 40 bis zur kugelförmigen Oberfläche 30 der Messfläche 3. Diese Distanz wird im weiteren als Messdistanz bezeichnet. Der Sensor 4 gibt über ein mehrpoliges Kabel 41 ein elektrisches Signal aus, welches die Messdistanz repräsentiert. Diese Messdistanz kann dann von einer Steuerung in den entsprechenden Winkel Δ umgerechnet werden, wobei Δ der Winkel ist, welcher sich zwischen dem Zugfahrzeug und dem Anhänger bei der Kurvenfahrt ergibt. Der Winkel Δ dient dann als Eingangssignal für die Steuerung der lenkbaren Achse des Anhängers. Die Ausführung einer Steuerung einer lenkbaren Achse ist dem Fachmann an sich bekannt. Bewegt sich nun das Zugfahrzeug mit dem Anhänger geradeaus resultiert ein Δ von 0°. Wird eine Kurvenfahrt nach links eingeleitet so wird Δ grösser als 0°. Wir nun eine Kurvenfahrt nach rechts eingeleitet so wird Δ kleiner als 0°. Diese Definition kann aber auch umgekehrt sein. Δ kann aber nicht grösser werden als die Hälfte des Öffnungswinkels α.

Die Messfläche 3 und der Sensor 4 sind vorzugsweise so zueinander angeordnet, dass der Sensor bei üblicher Fahrstellung mittig zur Messfläche angeordnet ist, so dass eine mittlere Messdistanz zwischen der kugelförmigen Oberfläche 30 und der Oberfläche 40 des Sensors 4 vorliegt. Als übliche Fahrstellung wird die Geradeaus-Fahrt auf einer Ebene verstanden, das Zugfahrzeug und der Anhänger stehen dann in der Achse X und auf der gleichen Ebene. Als mittige Anordnung wird der Mittelpunkt der Messfläche verstanden, der sich aus der Winkelhalbieren des Öffnungswinkel α und aus der Winkelhalbierenden des Öffnungswinkels β ergibt. Stehen Anhänger und Zugfahrzeug also in einer Achse, muss also der

Sensor 4 um einen Winkel α/2 von α₁ bzw. um einen Winkel von α/2 von α₂ angeordnet sein. Der Sensor 4 ist um einen Winkel β/2 von β₁ bzw. β₂ angeordnet, sofern der Anhänger und das Zugfahrzeug auf der gleichen Ebene stehen.

Im bevorzugten Ausführungsbeispiel gemäss Figur 5 liegt der Sensor in der Achse X. In anderen alternativen Ausführungsbeispielen aber auch beispielsweise auf der Achse Y angeordnet sein. Wichtig ist jedoch, dass dann auch die Messfläche entsprechend anders ausgerichtet wird.

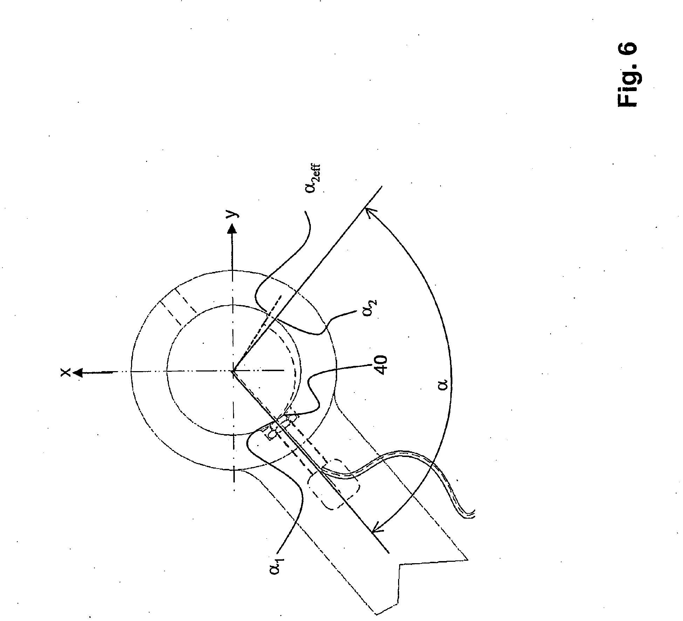

Wird nun das Zugfahrzeug nach rechts gelenkt, so bewegt sich die Zugstange 5 mit dem Sensor 4 in Richtung α1. Die Messdistanz wird demnach kleiner. Wird nun der eingeschlagene Lenkradius des Zugfahrzeuges kleiner, bewegt sich der Sensor weiter in Richtung α1. Bei maximalem Einschlag kommt der Sensor so zu liegen, dass die Messdistanz minimal ist. Diese extreme Position ist in Figur 6 gezeigt. In Figur 6 ist also der Winkel Δ=α/2 und die Messdistanz 0 mm.

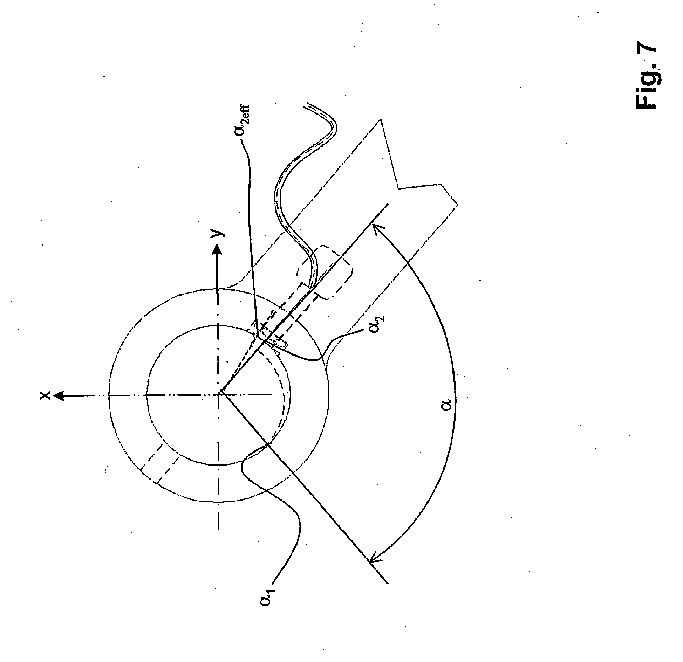

Bei einer Lenkung nach links, bewegt sich der Zugstange 5 mit dem Sensor 4 in Richtung α2. Die Messdistanz wird demnach grösser. Bei maximalem Einschlag kommt der Sensor so zu liegen, dass die Messdistanz maximal ist. Wird nun der eingeschlagene Lenkradius des Zugfahrzeuges kleiner, bewegt sich der Sensor weiter in Richtung α2. Diese Position ist in Figur 7 gezeigt. Bei maximalem Einschlag kommt der Sensor so zu liegen, dass die Messdistanz maximal ist. Diese extreme Position ist in Figur 7 gezeigt. In Figur 7 ist also der Winkel Δ=-α/2 und die Messdistanz 6 mm.

In dieser Figur ist auch ersichtlich, dass das effektive Öffnungsfeld α_{eff} grösser ist, als das oben.beschriebene geometrische Öffnungsfeld α. Das Öffnungsfeld α_{eff} erstreckt sich von α1 über α₂ nach α_{2eff}. Wäre α_{eff} gleich gross wie α, so würde der Sensor in dieser Endlage genau auf den Übergang 31 von der Messfläche 3 auf die Oberfläche der Kupplungskugel 20 zu liegen kommen. Der Sensor würde dann eine fehlerhaftes Messsignal ausgegeben, was zu einer fehlerhaften Messung führen würde. Daraus folgt, dass α_{eff} mindestens um die halbe Breite bzw. den halben Durchmesser des Sensors grösser sein muss.

Als Sensoren eignen sich insbesondere induktive Sensoren, kapazitive Sensoren, optische Sensoren oder Ultraschallsensoren. Es gilt zu beachten, dass die minimale Messdistanz und die maximale Messdistanz im Messbereich des ausgewählten Sensors liegt. Besonders gute Resultate wurden mit einem Sensor erzielt, welcher einen Messbereich von 0 mm bis 6 mm hat. Daraus folgt dann, dass die minimale Messdistanz bei α₁ 0 mm und die maximale Messdistanz bei α₂ 6 mm ist. Je nach Sensortyp kann die Messdistanz durch Variieren des Durchmesser der virtuellen Kugel 50 und des Abstandes A variiert werden. Generell sollte aber der Messbereich möglichst klein sein, so dass die Ausnehmung der Messfläche klein und somit eine entsprechende Festigkeit der Kugel gewährleistet werden kann.

In den bevorzugten Ausführungsbeispielen werden metallische Werkstoffe für die beiden Kupplungskörper verwendet. Dies muss bei der Wahl des Sensors ebenfalls berücksichtigt werden, denn dieser muss dann metallische Oberflächen detektieren können. Vorzugsweise werden induktive Näherungsschalter eingesetzt. Besonders gute Resultate wurden mit einem induktiven Näherungsschalter mit Analogausgang erzielt. Dabei wird vom Sensor ein analoges elektrisches Signal ausgegeben, welches die Distanz zwischen Sensor und Messfläche repräsentiert. Ein solcher Sensor kann beispielsweise ein Sensor von der Firma Contrinex mit der Artikelnummer DW-AD-509-M12-120 sein. Dem Fachmann ist aber klar, dass andere Sensoren ebenfalls eingesetzt werden können.

Figur 8 zeigt den äusseren Kupplungskörper 1 und den inneren Kupplungskörper 2 in einer teilweise geschnittenen Seitenansicht. Dieser gezeigte Zustand tritt ein, wenn das Zugfahrzeug und der Anhänger nicht auf der gleichen Ebene stehen, beispielsweise wenn eine Kuppe überfahren oder eine Senke durchfahren wird. Wie oben schon beschrieben, ist die Distanz zwischen der Oberfläche der Kupplungskugel und der Messfläche über den gesamten Öffnungswinkel β konstant. Das heisst, dass die Messdistanz für den Sensor beim Überfahren von Kuppen bzw. Durchfahren von Senken nicht beeinträchtigt wird.

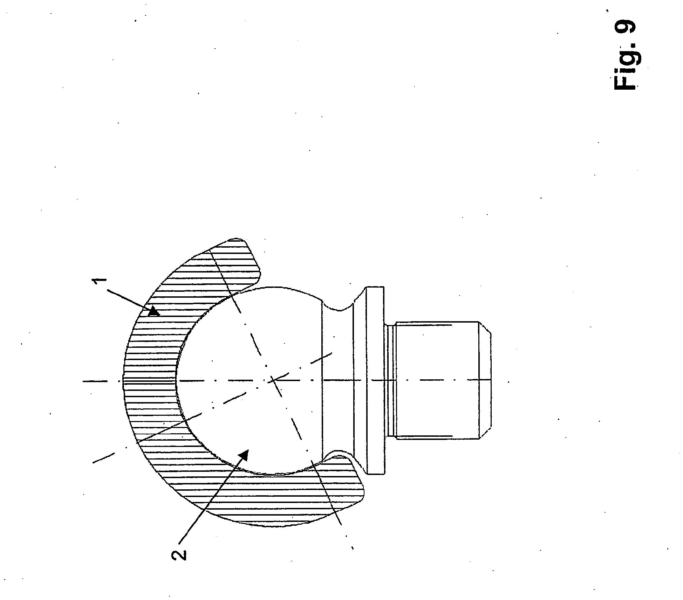

Figur 9 zeigt die Situation, wenn der Anhänger und das Zugfahrzeug um die X-Achse verdreht bzw. geneigt stehen. Diese Situation tritt beispielweise dann auf, wenn sich das Zugfahrzeug und der Anhänger nicht auf der gleichen Ebene befinden. Durch diese Stellung wird die Messdistanz nicht verfälscht, insbesondere, wenn der Sensor in der X-Achse angeordnet ist.

Alternativ kann die Öffnung der Messfläche 3 mit einem die Abstandsmessung nicht behindernden Material, insbesondere Kunststoff aufgefüllt sein. Dies verhindert dann ein Ansammeln von Schmutz und Schmiermittel auf der gegenüber der Oberfläche der Kupplungskugel versetzten Messfläche 3.

In einem weiteren nicht gezeigten Ausführungsbeispiel ist es möglich, dass die Messfläche aus einzelnen Segmenten besteht, welche dann zusammengesetzt die Form einer annähernden Kugel bilden, im Querschnitt ergibt sich jeweils ein Polygonzug.

In einem zusätzlichen, nicht gezeigten Ausführungsbeispiel ist es zudem möglich, dass der Sensor im inneren Kupplungskörper 2 angeordnet ist, vorzugsweise in einer radialen Bohrung, bei der eine Kabelverbindung mittig durch den unteren Teil des Kupplungskörpers geführt wird. Die Messfläche 3 wird dann im äusseren Kupplungskörper 1 als Ausnehmung angeordnet. Die virtuelle Kugel ist auch entsprechend versetzt und weist dann einen grösseren Radius auf. Die oben gemachten Ausführungen können analog auf dieses Ausführungsbeispiel angewandt werden. Dies erfordert eine hohe Miniaturisierung, da eine Bohrung für die Aufnahme eines Sensors die strukturelle Stärke des inneren Kupplungskörpers beeinflusst.

In einem weiteren nicht gezeigten Ausführungsbeispiel weist die Oberfläche der Messfläche eine rillenförmige Struktur auf. Solche Rillen können beispielsweise Nuten sein. Wie im oben beschriebenen Ausführungsbeispiel ist auch hier die Messfläche in gleicher Weise durch Öffnungslinien α₁, α₂ bzw. β₁, β₂ begrenzt. Diese Rillen erstrecken sich hier von der ersten Öffnungslinie β₁ zur zweiten Öffnungslinie β₂. Bei einer Kurvenfahrt resultiert eine Relativbewegung zwischen Sensor 4 und Messfläche 3 von der Öffnungslinie α₁ in Richtung der Öffnungslinie α₂ oder umgekehrt. Da die Rillen quer zu dieser Bewegung verlaufen verändert sich also die Struktur der Oberfläche in diese Richtung. Der Sensor kann die Veränderung der Struktur, also die Rillen bzw. deren Erhöhungen oder Vertiefung erfassen. Der Drehwinkel wird dabei durch Zählen der zurückgelegten Rillen bestimmt. Bei einer Überfahrt über eine Kuppe bzw. Senke resultiert eine Relativbewegung zwischen Sensor 4 und Messfläche 3 von der Öffnungslinie β₁ in Richtung der Öffnungslinie β₂ oder umgekehrt. Dabei bewegt sich der Sensor 4 entlang der Rillen.

In einem weiteren nicht gezeigten Ausführungsbeispiel ist die Oberfläche der Messfläche mittels einer anderen Oberflächenstruktur versehen. Vorzugsweise ist diese Struktur eine Färbung oder eine aufgeraute Oberflächen mit variabler Intensität in Färbung oder Rauheit. Die variable Intensität der Oberflächenstruktur sorgt für eine unterschiedliche Reflexion einer beispielsweise koaxialen Beleuchtung zum Sensor, welche dann von einem optischen Sensor erfasst wird. Beleuchtungsquelle und Sensor können auch in einem symmetrischen Winkel zur Radialachse angeordnet sein. Es ist zu beachten, dass in diesem Ausführungsbeispiel die Richtung der Struktur in analoger Weise angeordnet wird, dies wie bei den vorhergehenden Ausführungsbeispielen beschrieben ist.

### Bezugszeichenliste

- 1: erster Kupplungskörper
- 2: zweiter Kupplungskörper
- 3: Messfläche
- 4: Sensor
- 5: Zugstange

- 10: Kupplungspfanne

- 20: Kupplungskugel
- 21: Gewinde
- 22: Orientierungsmarkierung
- 23: Freistich
- 24: Flansch
- 24': Untere Kante
- 25: Zentrum

- 30: kugelförmige Oberflächen
- 31: Übergang

- 50: virtuelle Kugel
- 51: Kugelsegment für Messfläche
- 52: Zentrum

## Patentansprüche

1. Eine Kupplungsvorrichtung zur Messung eines Winkels in einer horizontalen Ebene (100) zwischen einem Anhänger und einem Zugfahrzeug umfassend einen ersten Kupplungskörper (1), der eine mindestens teilweise kugelförmige Kuppeloberfläche aufweist, und einen zweiten Kupplungskörper (2), der eine zur Kuppeloberfläche des ersten Kupplungskörpers (1) mindestens teilweise komplementäre Form aufweist, wobei an der Kuppeloberfläche des ersten oder des zweiten Kupplungskörpers (1, 2) eine Messfläche (3) vorgesehen ist, die sich über ein Teilsegment der Kuppeloberfläche des jeweiligen Kupplungskörpers (1, 2) erstreckt, **dadurch gekennzeichnet, dass** die Messfläche (3) im wesentlichen eine Vertiefung der Kupplungsoberfläche ist, und dass die Messfläche annähernd die Form eines Kugelsegmentes aufweist, wobei das Zentrum (52) des Kugelsegmentes gegenüber dem Zentrum (25) des ersten oder des zweiten kugelförmigen Kupplungskörper (1, 2) in Richtung mindestens einer Längsachse (Y), die in der horizontalen Ebene (100) liegt, verschoben ist.

2. Vorrichtung nach Anspruch 1, **dadurch gekennzeichnet, dass** die Messfläche (3) in einer horizontalen Ebene (100) ein durch einen Winkel (α) begrenztes Öffnungsfeld aufweist, wobei sich das Öffnungsfeld von einer ersten Öffnungslinie (α₁) zu einer zweiten Öffnungslinie (α₂) erstreckt.

3. Vorrichtung nach einem der vorhergehenden Ansprüche, **dadurch gekennzeichnet, dass** die Messfläche (3) in einer dritten Ebene (300) ein durch einen Winkel (β) begrenztes Öffnungsfeld aufweist, wobei sich der Öffnungsfeld von einer ersten Öffnungslinie (β₁) zu einer zweiten Öffnungslinie (β₂) erstreckt, wobei keine Änderung der Messfläche (3) über diesem Öffnungswinkel erfolgt.

4. Vorrichtung nach einem der vorhergehenden Ansprüche, **dadurch gekennzeichnet, dass** der Kupplungskörper (1, 2), an welchem die Messfläche (3) nicht angeordnet ist, ein Messmittel (4) zur Messung der Messfläche umfasst.

5. Vorrichtung nach einem der vorhergehenden Ansprüche, **dadurch gekennzeichnet, dass** ein Messmittel aus der Gruppe der induktiven Sensoren oder der kapazitiven Sensoren oder der optischen Sensoren oder der Ultraschallsensoren ausgewählt ist.

6. Vorrichtung nach Anspruch 2, **dadurch gekennzeichnet, dass** bei der ersten Öffnungslinie (α₁) die Vertiefung der Messfläche (3) minimal und sich dann in gleichmässiger Weise zu der zweiten Öffnungslinie (α₂) erstreckt, bei welche die Vertiefung der Messfläche (3) maximal ist.

7. Vorrichtung nach einem der vorhergehenden Ansprüche 4 bis 6, **dadurch gekennzeichnet, dass**, wenn der Anhänger und das Zugfahrzeug auf einer gemeinsamen geraden Achse (X) stehen, das Messmittel (4) so angeordnet ist, dass zwischen dem Messmittel und der Messfläche eine mittlere Distanz gemessen wird, und dass, wenn der Anhänger auf die eine Seite ausschwenkt, diese mittlere Distanz zunimmt und dass, wenn der Anhänger auf die andere Seite ausschwenkt, diese mittlere Distanz abnimmt.

8. Vorrichtung nach einem der vorhergehenden Ansprüche 3 bis 7, **dadurch gekennzeichnet, dass** die Oberfläche der Messfläche eine rillenförmige Struktur, insbesondere Rillen oder Nuten, aufweist, wobei sich die Vertiefungen der rillenförmige Struktur von der ersten Öffnungslinie (β₁) zu der zweiten Öffnungslinie (β₂) erstrecken.

9. Vorrichtung nach einem der vorhergehenden Ansprüche, **dadurch gekennzeichnet, dass** die Vertiefung der Messfläche mit einem Kunststoff ausgegossen ist, wobei die nach aussen stehende Oberfläche des Kunststoffs eine kugelförmige Oberfläche aufweist.

## Claims

1. A coupling device for measuring an angle in a horizontal plane (100) between a trailer and a towing vehicle comprising a first coupling body (1) which has an at least partially spherical coupling surface, and a second coupling body (2) which has a shape which is at least partially complementary to the coupling surface of the first coupling body (1), there being provided on the coupling surface of the first or of the second coupling body (1, 2) a measuring face (3) which extends over a partial segment of the coupling surface of the respective coupling body (1, 2), **characterized in that** the measuring face (3) is substantially a depression in the coupling surface, and **in that** the measuring face has approximately the shape of a spherical segment, the centre (52) of the spherical segment being displaced relative to the centre (25) of the first or the second spherical coupling body (1, 2) in the direction of at least one longitudinal axis (Y) which lies in the horizontal plane (100).

2. Device according to Claim 1, **characterized in that** in a horizontal plane (100) the measuring face (3) has an aperture field limited by an angle (α), the aperture field extending from a first aperture line (α₁) to a second aperture line (α₂).

3. Device according to either of the preceding claims, **characterized in that** in a third plane (300) the measuring face (3) has an aperture field limited by an angle (β), the aperture field extending from a first aperture line (β₁) to a second aperture line (β₂), there being no change in the measuring face (3) over this aperture angle.

4. Device according to one of the preceding claims, **characterized in that** the coupling body (1, 2) on which the measuring face (3) is not arranged comprises a measuring means (4) for measuring the measuring face.

5. Device according to one of the preceding claims, **characterized in that** a measuring means is selected from the group of inductive sensors or capacitive sensors or optical sensors or ultrasonic sensors.

6. Device according to Claim 2, **characterized in that** in the case of the first aperture line (α₁) the depression in the measuring face (3) extends minimally, and then in the uniform way to the second aperture line (α₂), in the case of which the depression in the measuring face (3) is maximum.

7. Device according to one of the preceding Claims 4 to 6, **characterized in that** when the trailer and the towing vehicle are on a common rectilinear axis (X), the measuring means (4) is arranged so that a mean distance is measured between the measuring means and the measuring face, and **in that** when the trailer swings out to one side this mean distance increases, and **in that** when the trailer swings out to the other side this mean distance decreases.

8. Device according to one of the preceding Claims 3 to 7, **characterized in that** the surface of the measuring face has a fluted structure, in particular flutes or grooves, the depressions in the fluted structure extending from the first aperture line (β₁) to the second aperture line (β₂).

9. Device according to one of the preceding claims, **characterized in that** the depression in the measuring face is filled up with a plastic, the outer surface of the plastic having a spherical surface.

## Revendications

1. Dispositif d'accouplement pour mesurer un angle dans un plan horizontal (100) entre une remorque et un véhicule tracteur, comprenant un premier corps d'accouplement (1), qui présente une surface de dôme au moins en partie de forme sphérique, et un deuxième corps d'accouplement (2), qui présente une forme au moins en partie complémentaire de la surface de dôme du premier corps d'accouplement (1), une surface de mesure (3) étant prévue sur la surface de dôme du premier ou du deuxième corps d'accouplement (1, 2), laquelle s'étend sur un segment partiel de la surface de dôme du corps d'accouplement respectif (1, 2), **caractérisé en ce que** la surface de mesure (3) est essentiellement un renfoncement de la surface de dôme et **en ce que** la surface de mesure présente approximativement la forme d'un segment de sphère, le centre (52) du segment de sphère étant déplacé par rapport au centre (25) du premier ou du deuxième corps d'accouplement (1, 2) de forme sphérique dans la direction d'au moins un axe longitudinal (Y), qui se situe dans le plan horizontal (100).

2. Dispositif selon la revendication 1, **caractérisé en ce que** la surface de mesure (3) présente dans un plan horizontal (100) un champ d'ouverture limité par un angle (α), le champ d'ouverture s'étendant depuis une première ligne d'ouverture (α₁) jusqu'à une deuxième ligne d'ouverture (α₂).

3. Dispositif selon l'une quelconque des revendications précédentes, **caractérisé en ce que** la surface de mesure (3) présente, dans un troisième plan (300), un champ d'ouverture limité par un angle (β), le champ d'ouverture s'étendant depuis une première ligne d'ouverture (β₁) jusqu'à une deuxième ligne d'ouverture (β₂), aucune modification de la surface de mesure (3) ne se produisant par le biais de cet angle d'ouverture.

4. Dispositif selon l'une quelconque des revendications précédentes, **caractérisé en ce que** le corps d'accouplement (1, 2), sur lequel la surface de mesure (3) n'est pas disposée, comprend un moyen de mesure (4) pour mesurer la surface de mesure.

5. Dispositif selon l'une quelconque des revendications précédentes, **caractérisé en ce qu'**un moyen de mesure est choisi parmi le groupe comprenant les capteurs inductifs, ou les capteurs capacitifs ou les capteurs optiques ou les capteurs à ultrasons.

6. Dispositif selon la revendication 2, **caractérisé en ce que** le renfoncement de la surface de mesure (3) est minimal au niveau de la première ligne d'ouverture (α₁) et s'étend alors de manière uniforme jusqu'à la deuxième ligne d'ouverture (α₂), à laquelle le renfoncement de la surface de mesure (3) est maximal.

7. Dispositif selon l'une quelconque des revendications précédentes 4 à 6, **caractérisé en ce que** lorsque la remorque et le véhicule tracteur se tiennent sur un axe droit commun (X), le moyen de mesure (4) est disposé de telle sorte qu'entre le moyen de mesure et la surface de mesure une distance moyenne soit mesurée, et que lorsque la remorque pivote d'un côté, cette distance moyenne augmente et que lorsque la remorque pivote de l'autre côté, cette distance moyenne diminue.

8. Dispositif selon l'une quelconque des revendications précédentes 3 à 7, **caractérisé en ce que** la surface de la surface de mesure présente une structure de forme rainurée, notamment des gorges ou des rainures, les renfoncements de la structure rainurée s'étendant depuis la première ligne d'ouverture (β₁) jusqu'à la deuxième ligne d'ouverture (β₂).

9. Dispositif selon l'une quelconque des revendications précédentes, **caractérisé en ce que** le renfoncement de la surface de mesure est coulé avec un plastique, la surface du plastique tournée vers l'extérieur présentant une surface de forme sphérique.
